# EUROPÄISCHE PATENTSCHRIFT

(11) **EP 1 777 143 B1**
(45) Veröffentlichungstag und Bekanntmachung des Hinweises auf die Patenterteilung: **18.11.2009**
(21) Anmeldenummer: 06016484.5
(22) Anmeldetag: 08.08.2006
(51) Int. Cl.: B62D 15/02, B60Q 1/50, B62D 6/00

(54) **Autobahnassistent**
Lane-change assistant
Dispositif d'assistance au changement de voie

(30) Priorität: 20.10.2005 DE 10550662
(43) Veröffentlichungstag der Anmeldung: 25.04.2007
(73) Patentinhaber: Volkswagen Aktiengesellschaft, 38436 Wolfsburg (DE)
(72) Erfinder: Kirchner, Alexander, Dr., 38448 Wolfsburg (DE); Schulenberg, Peter, Dr., 38536 Meinersen (DE); Schöning, Volkmar, 30900 Wedemark (DE)
(74) Vertreter: Meyer, Enno

(56) Entgegenhaltungen:
- EP-A2- 1 538 068
- WO-A-03/076249
- WO-A-2006/125709
- DE-A1- 10 012 737

## Beschreibung

Die Erfindung betrifft einen Autobahnassistenten zum semiautonomen Fahren eines Kraftfahrzeugs sowie ein Verfahren zum semiautonomen Fahren eines Kraftfahrzeuges auf einer Straße mit mindestens zwei Fahrbahnen mit gleicher Fahrtrichtung, d.h. einer Autobahn oder einer autobahnähnlichen Autostraße, nach dem Oberbegriff des Anspruchs 1 bzw. dem Oberbegriff des Anspruchs 10.

Zur Erhöhung der aktiven Sicherheit heutiger Kraftfahrzeuge bzw. des Kraftfahrzeugverkehrs werden mehr und mehr sogenannte Fahrerassistenzsysteme eingesetzt, die den Fahrer einerseits entlasten und andererseits gefährliche Verkehrssituationen verhindern bzw. zumindest entschärfen sollen.

Die Erarbeitung von Konzepten zur aktiven Unterstützung des Fahrers bei Längs- und Querführung des Fahrzeugs und deren Realisierung durch Prototypen bis hin zur Markteinführung serienreifer Fahrerassistenzsysteme ist ein wesentlicher Schwerpunkt in den Forschungs- und Entwicklungsbereichen der Automobilindustrie. So stellt beispielsweise das inzwischen serienreife Assistenzsystem Automatische Distanzregelung (ADR) bzw. Active Cruise Control (ACC) eine wesentliche Erweiterung des bekannten Tempomats dar. ADR regelt eine vom Fahrer gewählte Wunschgeschwindigkeit ein und ist mit Hilfe eines vorausschauenden Sensors zur Objekterkennung in der Lage durch aktiven Eingriff in Brems- und Motormanagement die Geschwindigkeit des eigenen Fahrzeugs entsprechend der jeweiligen Verkehrssituation anzupassen. Das System dient vorwiegend zur Fahrerentlastung auf Autobahnen und gut ausgebauten Straßen mit relativ einfacher Geometrie und vergleichsweise geringer Dynamik. ADR verwendet überwiegend ein Fernbereichsradar mit einer Reichweite von bis zu 150 m und einen Öffnungswinkel von ca. 10°. Es können auch Radarsysteme größerer Reichweite oder Lidarsysteme zum Einsatz kommen.

Ein weiteres System zur Unterstützung des Fahrers eines Kraftfahrzeuges betrifft ein Sicherheits-Überholsystem, welches beispielsweise aus der DE 197 25 656 A1 bekannt ist. Ein derartiges Sicherheits-Überholsystem unterstützt den Fahrer bei Überholvorgängen im Straßenverkehr mit Gegenverkehr, wobei mittels Sensoren verschiedene Entfernungen und Relativgeschwindigkeiten von Objekten vor dem überholenden Kraftfahrzeug, insbesondere vom Gegenverkehr, erfasst und Überholdaten von einer Berechnungsvorrichtung berechnet werden, die einen Rückschluss darauf zulassen, ob ein Überholvorgang unter den gegenwärtigen Bedingungen oder durch Leistungszuführung durch das Antriebsaggregat möglich ist oder überhaupt nicht möglich ist. Warnsignaleinrichtungen informieren daher den Fahrer über entsprechende Bedingungen. Ein derartiges System kann in das Bremssystem, die Leistungsregelung des Antriebsaggregats und die Lenkung eingreifen und das Überholmanöver unabhängig von der Reaktion des Fahrers abbrechen oder verhindern.

Ferner ist aus der DE 43 13 568 C1 ein Verfahren zur Leithilfe für einen Fahrspurwechsel durch ein Kraftfahrzeug von einer Momentanspur auf eine benachbarte Zielspur bekannt, bei dem der Vorraum und der Rückraum wenigstens der benachbarten Zielspur für den gewünschten Spurwechsel überwacht, die Abstände von dort detektierten Objekten, insbesondere Fahrzeugen, und deren Geschwindigkeiten gemessen sowie daraus Sicherheitsabstände berechnet werden. Wenn alle gemessenen Abstände größer als die errechneten Sicherheitsabstände sind, wird dies als möglicher Spurwechsel erkannt. Das Verfahren ist zur Unterstützung beim Fahrspurwechsel auf gleich gerichteten Fahrbahnen einsetzbar, wobei hier der Fahrspurwechsel vollständig vom Fahrer initiiert wird. Mit anderen Worten, der Fahrer aktiviert das System, um die Möglichkeit eines Fahrspurwechsels zu erfahren, beispielsweise wenn das Kraftfahrzeug auf der Momentanspur auf ein vorausfahrendes Fahrzeug aufläuft. Eine Verwendung bei einem teilautonomen Verfahren ist nicht beabsichtigt.

Bei heutigen, mit einem ADR-System ausgerüsteten Fahrzeugen ergibt sich bei dessen Verwendung das Problem, dass das ADR-System beispielsweise auf der rechten Autobahnspur (bei Rechtsverkehr) die eingestellte Wunschgeschwindigkeit im wesentlichen nicht erreicht, falls ein vorausfahrendes Fahrzeug mit geringerer Geschwindigkeit fährt. Dies führt zu einem verlangsamten Kolonnenfahren und verleitet den Fahrer dazu, auf der Überholspur zu wechseln und dort zu verbleiben, was auch hier zu einem Kolonnenverhalten führt.

Der Erfindung liegt daher die Aufgabe zugrunde, ein semiautonomes Fahren eines Kraftfahrzeugs auf einer Straße mit zumindest zwei gleich gerichteten Fahrspuren unter Verwendung eines ADR-Systems zu schaffen.

Diese Aufgabe wird durch einen Fahrerassistenten mit den Merkmalen des Anspruchs 1 bzw. des Anspruchs 2 sowie durch ein Verfahren zum semiautonomen Fahren mit den Merkmalen des Anspruchs 10 bzw. des Anspruchs 12 gelöst. Bevorzugte Ausgestaltungen der Erfindung sind Gegenstand der Unteransprüche.

Ein erfindungsgemäßer Autobahnassistent zum semiautonomen Fahren eines Kraftfahrzeugs umfasst einen Spurwechselassistenten, eine Vorrichtung zur Fahrspurerkennung, eine Navigationseinrichtung und eine automatische Distanzregelung ADR, wobei das Fahrzeug ferner eine Vorrichtung zur aktiven Lenkunterstützung aufweist, beispielsweise eine über einen Elektromotor angetriebene Servolenkung, ein sogenanntes EPS-System (Electric Power Steering). Dabei wird ein zusätzliches Lenkmoment vorgegebener Größe und Dauer durch die aktive Lenkunterstützung auf die Lenkung aufgebracht, wobei das Lenkmoment bei Rechtsverkehr nach links und bei Linksverkehr nach rechts wirkt, wenn folgende Anforderungen erfüllt sind: Der Autobahnassistent erkennt bei aktiviertem ADR innerhalb eines vorgegebenen Vorausschauhorizontes, d.h., bevor das ADR die Wunschgeschwindigkeit aufgrund eines vorausfahrenden Fahrzeuges tatsächlich drosselt, dass die Wunschgeschwindigkeit durch dieses vorausfahrende Fahrzeug verringert werden müsste. In diesem Fall wird überprüft, ob sich eine weitere Fahrbahn neben der aktuellen Fahrbahn befindet, d.h., bei Rechtsverkehr wird überprüft, ob links von der aktuellen Fahrbahn eine weitere Fahrbahn angeordnet ist. Für Linksverkehr gilt entsprechend das Überprüfen einer weiteren Fahrbahn rechts von der aktuellen Fahrbahn. Trifft dies ebenfalls zu, so überprüft der Spurwechselassistent des Autobahnassistenten, ob sich eine Lücke zum Fahrbahnwechsel auf die weitere Fahrbahn, d.h. auf die Zielspur, vorhanden ist. Ist dies der Fall, so wird durch das Aufbringen des zusätzlichen Lenkmomentes auf die Lenkung dem Fahrer signalisiert, dass er einen Fahrbahnwechsel vornehmen sollte. Übersteuert der Fahrer dies Empfehlung des Autobahnassistenten, so verbleibt das Fahrzeug auf der Momentanspur und das ADR regelt ab einer vorgegebenen Distanz die Wunschgeschwindigkeit herab, um einen Mindestabstand zu dem voraus fahrenden Fahrzeug einzuhalten. Folgt der Fahrer der Empfehlung des Autobahnassistenten, so wechselt das Fahrzeug die Fahrspuren und auf der neue Fahrspur wird die Wunschgeschwindigkeit des ADR beibehalten.

Das Erreichen bzw. Beibehalten der Wunschgeschwindigkeit trifft natürlich nur für den Fall zu, dass auf der weiteren Fahrspur sich keine weiteren Fahrzeuge befinden, welche langsamer sind als das vorausfahrende Fahrzeug auf der ursprünglichen Fahrspur. Diese Situation trifft jedoch für Autobahnfahrten üblicherweise zu, wobei in einer bevorzugten Ausführungsform weiterhin abgeprüft wird, ob sich auf der Zielspur in Vorausrichtung ein Fahrzeug befindet, welches ebenfalls eine Herabsetzung der Wunschgeschwindigkeit bewirken würde. Da dies jedoch im wesentlichen für solche Geschwindigkeiten der Fall ist, bei denen das ADR-System nicht verwendet wird, d.h. bei Kolonnenfahren auf mehreren gleichgerichteten Fahrspuren, ist dieser Fall für den erfindungsgemäßen Autobahnassistenten aufgrund der Übersteuerbarkeit durch den Fahrer von geringerer Relevanz.

In einer weiteren bevorzugten Ausführungsform wird der Fall behandelt, in welchem sich das Kraftfahrzeug auf der oder einer der Überholspur(en) befindet. Aufgrund des Rechtsfahrgebots bei Rechtsverkehr sollte das semiautonome Fahren bewirken, dass das Kraftfahrzeug nach einem Ausschervorgang nicht auf der Überholspur verbleibt, sondern dass bei geeigneten Verkehrssituationen der Fahrer durch den Autobahnassistenten angehalten wird, wieder auf die rechte Spur zurückzukehren, da ein Verbleiben des Kraftfahrzeuges auf der Überholspur andere Fahrzeuge mit höherer Wunschgeschwindigkeit behindern würde. Dieselbe Situation gilt analog für Linksverkehr. In dem Fall, dass das Fahrzeug sich also auf der Überholspur oder einer der Überholspuren bei Straßen mit mehr als zwei gleichgerichteten Fahrbahnen befindet, wird ein zusätzliches Lenkmoment auf die Lenkunterstützung aufgebracht, wobei die Richtung bei Rechtsverkehr nach rechts und bei Linksverkehr nach links ist, wenn sich bei Rechtsverkehr rechts von der aktuellen Fahrbahn und bei Linksverkehr links von der aktuellen Fahrbahn eine weitere Fahrbahn befindet, eine Lücke zum Fahrbahnwechsel auf der weiteren Fahrspur durch den Spurwechselassistenten erkannt wird, und sich auf der weiteren Fahrspur in einer vorgegebenen Entfernung, der sogenannten Vorausschauweite oder dem Vorausschauhorizont, sich kein vorausfahrendes Fahrzeug befindet, welches ein Herabsetzen der Wunschgeschwindigkeit durch das ADR nötig machen würde.

In diesem Fall erkennt der Autobahnassistent, dass ein Wechsel von einer aktuellen Spur auf eine bei Rechtsverkehr rechts von dieser angeordneten Spur möglich ist, ohne dass ein Herabsetzen der Wunschgeschwindigkeit des ADR innerhalb des Vorausschauhorizontes bewirkt werden müsste. Durch die Verwendung des Autobahnassistenten sowohl für das Ausscheren nach links auf eine Überholspur und auch für das wieder Zurückwechseln in eine rechte Spur bzw. bei zweispurigen Fahrbahnen auf die Grundspur, wird eine Verflüssigung des Verkehrs durch den Autobahnassistent zum semiautonomen Fahren bewirkt.

Vorzugsweise weist der Spurwechselassistent mindestens eine in Fahrtrichtung nach hinten gerichtetes Nahradar auf, die Fahrspurerkennung mindestens eine Monovideokamera und das ADR einen Fernradar auf. Das Nahbereichradar kann ein 24 GHz-Radar und das Fernradar ein 67 GHz-Radar sein. Anstelle oder zusätzlich zu dem Fernradars des ADR kann auch ein LIDAR-System zum Einsatz kommen.

Vorzugsweise überwacht der Autobahnassistent über einen vorgegebenen Zeithorizont detektierte Fahrzeuge bzw. Objekte. Innerhalb dieses Zeithorizonts werden beispielsweise Fahrzeuge, die überholt werden, nachgeführt bzw. getrackt, was zur Folge hat, dass von dem ADR bzw. der Monokamera der Fahrspurerkennung erkannte Fahrzeuge bzw. Objekte quasi gespeichert und nachverfolgt werden, wodurch der rückwärtige Radar des Spurwechselassistenten, der aufgrund von Nebenkeulen Objekte ab der B-Säule des Kraftfahrzeuges erkennen kann, allerdings mehrere Messungen zur Identifizierung benötigt, derartige überholte Fahrzeuge bzw. Objekte folglich früher erkennen kann. Ferner ist aus der Nachverfolgung erkannter, identifizierter und überholter Objekte ein einfacherer Fahrspurwechsel hin zur Zielspur möglich. Ein ähnliches Verfahren des Nachverfolgens oder Trackens kann auch für Objekte auf der Überholspur angewendet werden, die vom Spurwechselassistent erkannt werden, allerdings das eigene Fahrzeug mit höherer Geschwindigkeit überholen, wodurch diese dann ebenfalls im Vorderbereich der Kamera bzw. des Fernradars auftauchen.

Ferner ist der Autobahnassistent vorzugsweise mit einer vorgegebenen Vorausschauweite ausgestattet, die naturgemäß größer ist als der Regelabstand des ADR auf ein vorausfahrendes Fahrzeug. Innerhalb der Vorausschauweite wird daher erkannt, ob es in Zukunft nötig sein wird, die beim ADR eingestellte Wunschgeschwindigkeit herabzusetzen aufgrund eines langsameren vorausfahrenden Fahrzeuges.

Vorzugsweise ist die Kamera der Fahrspurerkennung und das Fernradar des ADR mit einander gekoppelt, um aus der Korrelation der Messdaten Objekte, d.h. Fahrzeuge, in Vorausrichtung identifizieren zu können, um ein vorausschauendes Fahren zu ermöglichen, d.h., eine Voraussage hinsichtlich beispielsweise eines langsameren vorausfahrenden Fahrzeuges treffen zu können.

Vorzugsweise ist die Lenkempfehlung, also das Aufbringen eines zusätzlichen Lenkmoments, vom Fahrer übersteuerbar, so dass der Fahrer des Kraftfahrzeuges bei dem semiautonomen Fahren immer die Oberhand über den Autobahnassistenten behält.

Ferner kann Autobahnassistent einen Spurhalteassistent mit aktivem Lenkeingriff aufweisen, welcher auch als Heading Control, abgekürzt HC, bezeichnet wird. Dabei muss bei einem Ausscheren über den Autobahnassistent auch der Blinker gesetzt werden, da ansonsten das Heading Control noch aktiv wäre, und bei einem aktiven Heading Control diese den Autobahnassistent übersteuern würde.

Bei dem erfindungsgemäßen Verfahren zum teilautonomen Fahren eines Kraftfahrzeuges auf einer Straße mit mindestens zwei Fahrbahnen gleicher Fahrtrichtung, mit anderen Worten Autobahnen oder mehrspurig ausgebaute Straßen, unter Verwendung des oben genannten Autobahnassistenten, umfasst die folgenden Schritte:
- Analysieren, ob innerhalb einer vorgegebenen Vorausschauweite sich ein voraus fahrendes Fahrzeug auf der eigenen aktuellen Fahrspur befindet, welches dazu zwingt, eine eingestellte Wunschgeschwindigkeit in Kürze herabsetzen zu müssen,
- Feststellen, ob sich bei Rechtsverkehr links von der eigenen Fahrspur und bei Linksverkehr rechts von der eigenen Fahrspur eine weitere Fahrbahn, die Zielspur, befindet,
- Feststellen, ob eine zum Ausscheren ausreichende Fahrlücke sich auf der weiteren Fahrbahn befindet,
- Feststellen, ob in der Vorausrichtung sich auf der weiteren Fahrbahn kein weiteres vorausfahrendes Fahrzeug befindet, welches zum Verringern der Wunschgeschwindigkeit führen würde, und
- Ausgeben einer Spurwechselempfehlung an den Fahrer, wenn die vorangegangenen Schritte positiv beantwortet werden.

Bei einer weiteren Ausgestaltung des erfindungsgemäßen Verfahrens, bei welchem sich das Fahrzeug nach einer Spurwechselempfehlung auf der Überholspur befindet, wird das Fahrzeug auf eine benachbarte rechte Spur bei Rechtsverkehr zurückführt, wenn die folgenden Bedingungen erfüllt sind:
- Feststellen, ob sich rechts von der eigenen aktuellen Fahrspur eine weitere Fahrbahn befindet,
- Feststellen, dass sich auf dieser weiteren Fahrbahn innerhalb der Vorausschauweite kein Fahrzeug befindet, welches zu einem Herabsetzen der Wunschgeschwindigkeit des ADR zwingen würde,
- Feststellen, ob sich eine zum Ausscheren ausreichende Fahrlücke auf der weiteren rechten Fahrbahn befindet, und
- Ausgeben einer Spurwechselempfehlung an den Fahrer, wenn die vorangegangenen Schritte positiv beantwortet werden.

Bei Linksverkehr gelten die obigen Verfahrensregeln mit entsprechend geänderten Richtungen.

Vorzugsweise wird die Spurwechselempfehlung an den Fahrer durch das Beaufschlagen eines geringen Lenkmomentes auf die Lenkvorrichtung in Richtung zur Zielspur hin gegeben.

Um den zeitlichen Ablauf der überholten Fahrzeuge nachverfolgen zu können, und um die Identifikation der Fahrzeuge zu erleichtern, wird durch das Verfahren für eine vorgegebene Zeitspanne eine Nachverfolgung der detektierten Objekte durchgeführt.

Insbesondere können überholte Fahrzeuge mittels eines Trackingverfahrens nachverfolgt werden.

Durch das erfindungsgemäße Verfahren sowie die erfindungsgemäße Vorrichtung wird ein flüssigeres Fahrverhalten von Fahrzeugen mit aktiviertem ADR-System erreicht. Insbesondere kann erreicht werden, dass durch die vorgegebenen Beaufschlagungen mit einem gewissen Lenkmoment der Fahrer zu einem Einhalten des Rechtsfahrgebotes auf Autobahnen angehalten wird. Die Bezeichnungen rechts und links gelten für Verkehr mit Linksverkehr entsprechend in umgekehrter Richtung.

Der nächststehende Stand der Technik ist aus dem Dokument WO-A-2006/125709 bekannt gegeben. Dieses Dokument hat Priorität vom 27. Mai 2005, wurde am 30. November 2006 veröffentlicht, fällt somit unter dem Art. 54(3) EPU, und offenbart im Bezug auf Anspruch 1 ein:
Autobahnassistent zum semiautonomen Fahren für eine Kraftfahrzeug mit einem Spurwechselassistenten, einer Vorrichtung zur Fahrspurerkennung, einer Navigationseinrichtung und einer automatischen Distanzregelung ADR, wobei das Fahrzeug ferner eine Vorrichtung zur aktiven Lenkunterstützung aufweist, wobei ein zusätzliches Lenkmoment vorgegebener Größe und Dauer bei Rechtsverkehr nach links und bei Linksverkehr nach rechts wirkend auf die Lenkunterstützung aufgebracht wird, wenn der Autobahnassistent erkennt, dass innerhalb einer vorgegebenen Vorausschauweite die Wunschgeschwindigkeit des ADR durch ein vorausfahrenden Fahrzeug herabgesetzt werden müsste, eine weitere Fahrbahn sich bei Rechtsverkehr links und bei Linksverkehr rechts von der aktuellen Fahrbahn befindet und eine Lücke zum Fahrbahnwechsel auf die weitere Fahrbahn vorhanden ist.

Das Dokument WO-A-2006/125709 ofennbart im Bezug auf Anspruch 2 weiter ein: Autobahnassistent, insbesondere nach Anspruch 1, zum semiautonomen Fahren für eine Kraftfahrzeug mit einem Spurwechselassistenten, einer Vorrichtung zur Fahrspurerkennung, einer Navigationseinrichtung und einer automatischen Distanzregelung ADR, wobei das Fahrzeug ferner eine Vorrichtung zur aktiven Lenkunterstützung aufweist, wobei ein zusätzliches Lenkmoment vorgegebener Größe und Dauer bei Rechtsverkehr nach rechts und bei Linksverkehr nach links auf die Lenkunterstützung aufgebracht wird, wenn bei Rechtsverkehr rechts und bei Linksverkehr links von der aktuellen Fahrbahn des Fahrzeugs sich eine weitere Fahrbahn befindet, eine Lücke zum Fahrbahnwechsel auf die weitere Fahrspur erkannt wird und sich auf der weiteren Fahrspur innerhalb einer vorgegebenen Vorausschauweite kein vorausfahrenden Fahrzeug befindet, dass ein Herabsetzen der Wunschgeschwindigkeit durch das ADR nötig machen würde.

Das Dokument WO-A-20061125709 ofennbart im Bezug auf Anspruch 10 weiter ein: Verfahren zum teilautonomen Fahren eines Kraftfahrzeugs auf einer Straße mit mindestens zwei Fahrbahnen gleicher Fahrtrichtung unter Verwendung eines Autobahnassistenten nach einem der vorangegangenen Ansprüche mit den folgenden Schritten:
- Analysieren ob innerhalb einer vorgegebenen Vorausschauweite sich ein vorausfahrendes Fahrzeug auf der eigenen aktuellen Fahrspur befindet, welches dazu zwingt eine eingestellte Wunschgeschwindigkeit herabsetzen zu müssen,
- Feststellen, ob sich bei Rechtsverkehr links von der eigenen Fahrspur und bei Linksverkehr rechts von der eigenen Fahrspur eine weitere Fahrbahn befindet,
- Feststellen, ob eine zum Ausscheren ausreichende Fahrlücke sich auf der weiteren Fahrbahn befindet,
- Ausgeben einer Spurwechselempfehlung an den Fahrer, wenn die vorangegangenen Schritte positiv beantwortet werden, wobei die Spurwechselempfehlung durch Aufbringen eines geringen Lenkmoments vorgegebener Größe und Dauer auf die Lenkung.

Das Dokument WO-A-2006/125709 offenbart schliesslich im Bezug auf Anspruch 12 ein: Verfahren, insbesondere nach einem der Ansprüche 10 oder 11, zum teilautonomen Fahren eines Kraftfahrzeugs auf einer Straße mit mindestens zwei Fahrbahnen gleicher Fahrtrichtung unter Verwendung eines Autobahnassistenten nach einem der vorangegangenen Ansprüche mit den folgenden Schritten:
- Feststellen, ob sich bei Rechtsverkehr rechts von der aktuellen Fahrspur und bei Linksverkehr links von der aktuellen Fahrspur eine weitere Fahrbahn befindet,
- Feststellen, dass sich auf der weiteren Fahrbahn innerhalb der Vorausschauweite kein Fahrzeug befindet, welches zu einem Herabsetzen der Wunschgeschwindigkeit zwingen würde,
- Feststellen, dass sich eine zum Ausscheren ausreichende Fahrlücke auf der weiteren Fahrbahn befindet, und
- Ausgeben einer Spurwechselempfehlung an den Fahrer, wenn die vorangegangenen Schritte positiv beantwortet werden, wobei die Spurwechselempfehlung durch Aufbringen eines geringen Lenkmoments vorgegebener Größe und Dauer auf die Lenkung.

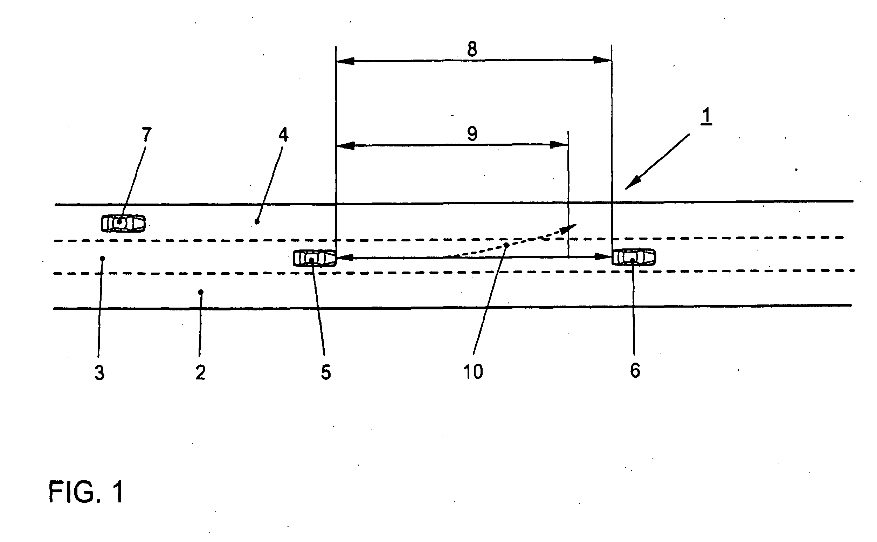

Bevorzugte Ausführungsformen der Erfindung werden nachfolgend anhand der Zeichnungen dargestellt. Dabei zeigt
Fig. 1 die in schematischer Darstellung eine typische Situation auf einer dreispurigen Autobahn,
Fig. 2 einen Lenkeingriff ohne Übersteuerung durch den Fahrer in zeitlicher Darstellung,
Fig. 3 einen Lenkeingriff mit Übersteuerung durch den Fahrer,
Fig. 4 eine erste Möglichkeit einer Realisierung eines Lenkmoments,
Fig. 5 eine zweite Möglichkeit der Realisierung eines Lenkmoments, und
Fig. 6 eine weitere Möglichkeit der Realisierung eines Lenkmoments.

Die Figur zeigt eine dreispurige Straße 1, vorzugsweise eine Autobahn mit einer rechten Fahrspur 2, einer mittleren Fahrspur 3 sowie einer linken Fahrspur 4. Auf der mittleren Fahrspur 3 bewegt sich ein Fahrzeug 5 in Fahrtrichtung der Figur von links nach rechts mit eingeschaltetem ADR-System, d.h., es wurde eine Wunschgeschwindigkeit gewählt, und das ADR-System weist eine Regelweite 9 auf. Innerhalb der Regelweite 9 wird auf das vorausfahrenden Fahrzeug geregelt und die Geschwindigkeit absenkt, um einen Abstand zu dem vorausfahrenden Fahrzeug einzuhalten, der größer als ein Mindestabstand ist. Dargestellt in der Figur ist ferner ein vor dem Fahrzeug 5 befindliches vorausfahrendes Fahrzeug 6, wobei zwischen den Fahrzeugen 5 und 6 ein Abstand 8 ist, der größer als die Regelweite 9 aber kleiner als die nicht dargestellte Vorausschauweite des Fernradar ist. Auf der linken Fahrspur 4 befindet sich ein weiteres Fahrzeug 7 in Fahrtrichtung hinter dem betrachteten, mit ADR ausgerüstetem Fahrzeug 5. Aufgrund der höheren Geschwindigkeit des Fahrzeuges 5 erfasst das Fernradar des ADR das vorausfahrende Fahrzeug 6. In diesem Fall wird dann geprüft, ob sich links von der mittleren Fahrspur eine weitere Fahrspur befindet, wobei hier die Aussage Ja lautet. Ferner wird durch den Spurwechselassistenten überprüft, ob die Fahrlücke zwischen dem nachfolgenden Fahrzeug 7 und dem betrachteten Fahrzeug 5 groß genug ist, um einen Ausschervorgang durchführen zu können. Dazu wird natürlich ebenfalls die Geschwindigkeit des auf der linken Spur 4 befindlichen Fahrzeugs 7 überprüft. Ist auch diese Aussage positiv, und ist die Aussage positiv, dass die Geschwindigkeit des vorausfahrenden Fahrzeugs 6, auf welches das Fahrzeug 5 aufläuft, kleiner ist als die derzeitige gefahrene Wunschgeschwindigkeit des Fahrzeugs 5, so wird dem Fahrer eines Fahrzeugs 5 eine Spurwechselempfehlung durch Aufbringen eines Lenkmoments nach links gegeben, wodurch ein Spurwechsel eingeleitet wird, welcher durch den Pfeil 10 symbolisiert ist. In analoger Weise kann, nachdem das Fahrzeug 5 das Fahrzeug 6 überholt hat, mit einem analogen Verfahren, wie dies im vorangegangenen geschildert wurde, wiederum ein Spurwechsel auf die mittlere Spur initiiert werden.

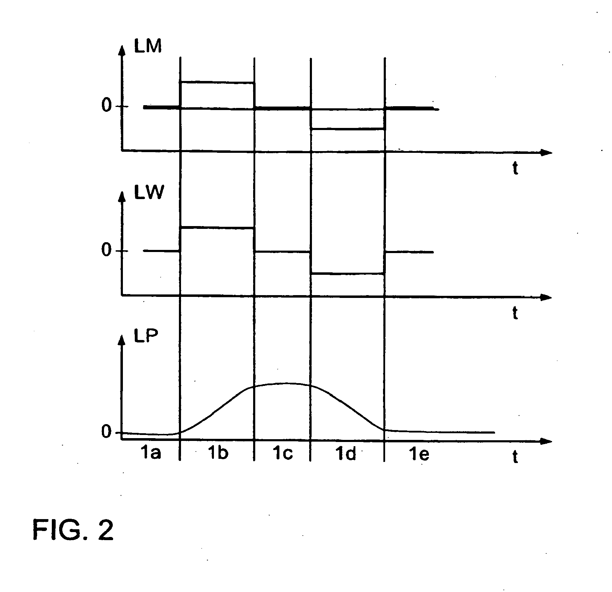

Fig. 2 zeigt einen Lenkeingriff ohne Übersteuerung durch den Fahrer in schematischer Darstellung als Funktion der Zeit t. Dabei zeigt der obere Graph das Lenkmoment LM als Funktion der Zeit t, der mittlere Graph den sich aus dem Lenkmoment ergebenden Lenkwinkel LW und der untere Graph die resultierende laterale Position des Fahrzeugs LP. Unterteilt sind die drei Graphen in zeitliche Intervalle 1a bis 1e mit den folgenden Bedeutungen.

Im Intervall 1 a fährt das Fahrzeug mit eingeschaltetem Autobahnassistenten an ein vorausfahrendes Fahrzeug heran und der Autobahnassistent berechnet, dass ein Spurwechsel möglich ist.

Zu Beginn des zweiten Intervalls 1b gibt der Autobahnassistent dann eine Spurwechselempfehlung an den Fahrer ab, indem ein Lenkmoment einer vorgegebenen Größe für die Dauer des Intervalls 1 b auf das Lenkrad gegeben wird. Dies führt im mittleren Graph zu einem Lenkwinkel LW vorgegebener Größe, wodurch sich die laterale Position LP des Fahrzeugs ändert. Mit anderen Worten, im Intervall 1b wird ausgeschert und ein Spurwechsel durchgeführt.

Im Intervall 1c wird das Lenkmoment LM zurückgenommen, d.h. wieder auf Null gebracht. Daher wird der Lenkwinkel LW wieder Null und die laterale Position des Fahrzeugs geht in einen konstanten Wert über, was bedeutet, dass das Fahrzeug auf der Zielspur wieder gerade aus fährt. Diese satbilisieren innerhalb der Zielspur, welche im allgemeinen die Überholspur ist, kann entweder über den Fahrer oder über einen Spurhalteassistenten mit aktivem Lenkeingriff erfolgen, der dafür sorgt, dass das Fahrzeug innerhalb seiner Spur bleibt, was auch als Heading Control, abgekürzt HC, bezeichnet wird.

Im Intervall 1d hat der Autobahnassistent erkannt, dass auch auf der rechten Spur, d.h. der Ausgangsspur, die eingestellte Wunschgeschwindigkeit gefahren werden kann, d.h. sowohl auf der aktuellen Überholspur als auch auf der rechten Spur ist kein Fahrzeug vorhanden, welches zu einer Herabsetzung der Wunschgeschwindigkeit führen könnte und das Fahrzeug könnte wieder auf die rechte Spur wechseln. Daher besteht gibt der Autobahnassistent ein vorgegebenes Lenkmoment in Richtung zur rechten Spur auf das Lenkrad, was hier durch ein negatives Lenkmoment dargestellt ist. Dies führt zu einem entsprechenden negativen Lenkwinkel, wodurch sich die laterale Position des Fahrzeugs hin zur rechten Spur ändert. Es wird daher ein Wiedereinscheren bzw. ein Spurwechsel durchgeführt.

Im Intervall 1e der Fig. 2 wird wieder eine Stabilisierung des Fahrzeugs innerhalb der Ausgangsspur durchgeführt, was wie im Intervall 1c durch den Fahrer selbst oder durch einen Spurhalteassistent mit aktivem Lenkeingriff durchgeführt werden kann.

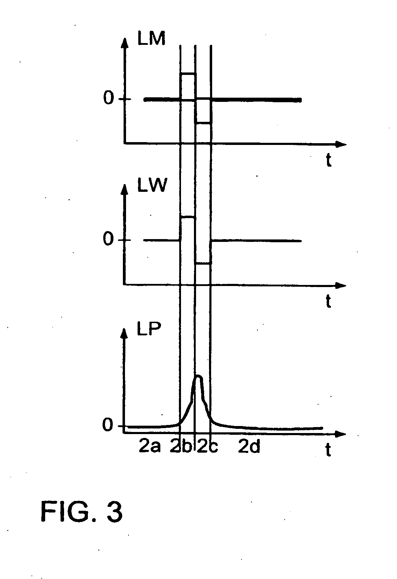

Fig. 3 zeigt die Situation eines Lenkeingriffs des Autobahnassistenten mit einer Übersteuerung seitens des Fahrers in schematische Darstellung als Funktion der Zeit.

Im Intervall 2a fährt das Fahrzeug mit eingeschaltetem Autobahnassistenten an ein vorausfahrendes Fahrzeug heran und der Autobahnassistent berechnet, dass ein Spurwechsel möglich ist.

Im nachfolgenden Zeitintervall 2b gibt der Autobahnassistent ein vorgegebenes Lenkmoment LM auf das Lenkrad, was zu einem vorgegebenen Lenkwinkel LW führt (mittlerer Graph), wodurch sich die laterale Position LP des Fahrzeugs in Richtung Zielspur hin ändert (unterer Graph).

Der Fahrer möchte jedoch keinen Spurwechsel durchführen. Daher bringt er ein Lenkmoment LM in die Gegenrichtung im Intervall 2c auf das Lenkrad auf, wodurch sich ein entsprechend negativer Lenkwinkel LW einstellt und sich die laterale Position des Fahrzeugs wieder zurück verschiebt. Im Intervall 2d ist das Lenkmoment wieder Null, der Lenkwinkel ebenfalls wieder Null und das Fahrzeug befindet sich auf der Ausgangsspur, was ebenfalls durch den Wert Null dargestellt ist.

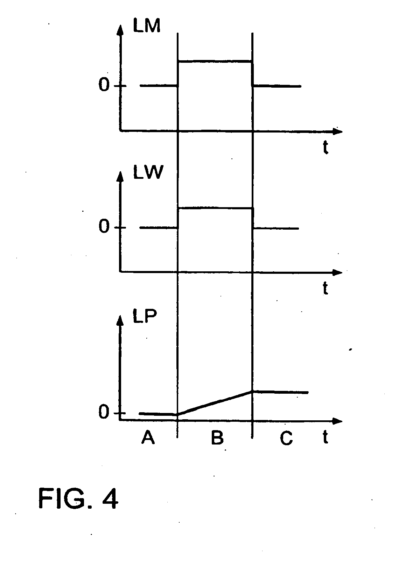

Fig. 4 zeigt eine erste Möglichkeit des Beaufschlagens des Lenkrades mit einem Lenkmoment, wobei hier das positive Lenkmoment LM in Form eines Rechteckpulses vorgegebener Höhe und Zeitdauer auf das Lenkrad während eines Zeitintervalls B gegeben wird. Dies führt zu einem Lenkwinkel in Form eines Rechtecks und zu einer Änderung der lateralen Position LP in Form einer ansteigenden Geraden als Funktion der Zeit t. In den Intervallen A und C ist das Lenkmoment LM und damit der Lenkwinkel LW wieder Null.

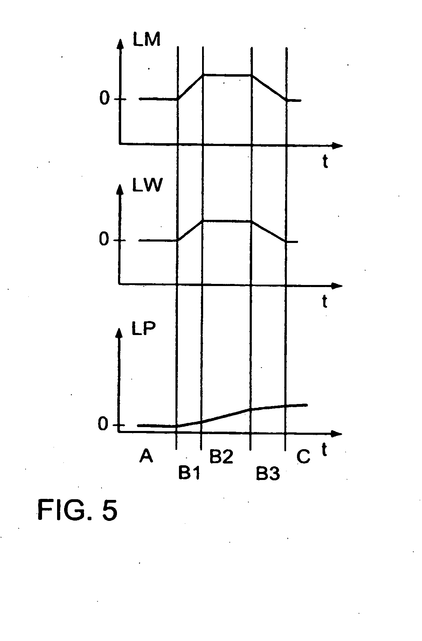

In Fig. 5 wird das Lenkmoment LM in Form einer Trapezfunktion auf das Lenkrad aufgebracht, d.h. das Lenkmoment ändert sich während eines vorderen Zeitintervalls B1 linear bis zu einer vorgegebenen Größe, bleibt konstant während eines mittleren Intervalls B2 und wird wieder linear auf Null geregelt während eines hinteren Zeitintervalls B3. Dabei können die Steigungen der linearen Zunahme und der linearen Abnahme in den Intervallen B1 und B3 verschieden sein. Dies führt zu einer lateralen Änderung der Position LP des Fahrzeugs mit unterschiedlichen Steigungen. Mit anderen Worten, die zeitliche Funktion des Lenkmoments wird durch eine stückweise lineare Funktion gebildet. In den Intervallen A und C ist das Lenkmoment LM und damit der Lenkwinkel LW wieder Null.

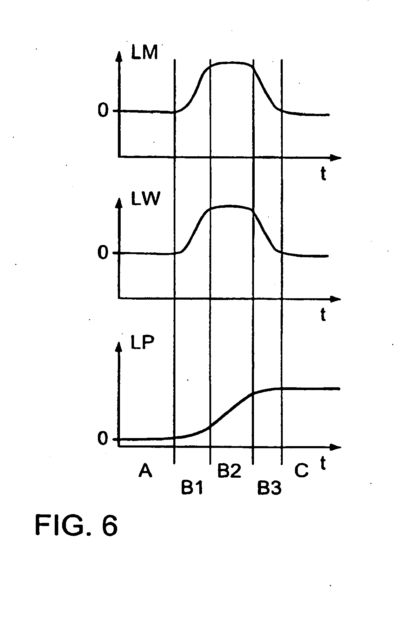

In Fig. 6 ist beispielhaft der Fall dargestellt, in welchem die zeitliche Funktion des Lenkmoments durch eine nichtlineare Funktion gebildet wird. Dies führt zu einem für den Fahrer angenehmeren zeitlichen Ablauf der Änderung der lateralen Position LP des Fahrzeugs. In einem vorderen Intervall B1 wird das Lenkmoment LM nichtlinear stetig bis zu einem Maximalwert geändert, wobei der Übergang zu dem Maximalwert abflachend ausgebildet ist. Für ein mittleres Zeitintervall B2 bleibt das Lenkmoment LM auf dem vorgegebenen Maximalwert und wird in einem hinteren Zeitintervall B3 nichtlinear wieder auf Null geführt, wobei auch hier an den Übergangspunkten der Intervalle die Funktion sanft in den Zielwert übergeht. In den Intervallen A und C ist das Lenkmoment LM und damit der Lenkwinkel LW wieder Null. Dies führt im Ergebnis zu einem für den Fahrer angenehmen, sich nicht abrupt ändernden Verlauf der lateralen Position LP des Fahrzeugs.

### BEZUGSZEICHENLISTE

- 1: Autobahn
- 2: Fahrspur Rechts
- 3: Fahrspur Mitte
- 4: Fahrspur Links
- 5: Fahrzeug
- 6: Fahrzeug
- 7: Fahrzeug
- 8: Abstand
- 9: Regelweite
- 10: Spurwechsel
- 1a: erstes Zeitintervall
- 1 b: zweites Zeitintervall
- 1 c: drittes Zeitintervall
- 1 d: viertes Zeitintervall
- 1 e: fünftes Zeitintervall
- 2a: erstes Zeitintervall
- 2b: zweites Zeitintervall
- 2c: drittes Zeitintervall
- 2d: viertes Zeitintervall
- LM: Lenkmoment
- LW: Lenkwinkel
- LP: Laterale Position des Fahrzeugs
- t: Zeit
- A: Zeitintervall
- B: Zeitintervall
- C: Zeitintervall
- B1: Zeitintervall
- B2: Zeitintervall
- B3: Zeitintervall

## Patentansprüche

1. Autobahnassistent zum semiautonomen Fahren für ein Kraftfahrzeug mit einem Spurwechselassistenten, einer Vorrichtung zur Fahrspurerkennung, einer Navigationseinrichtung und einer automatischen Distanzregelung ADR, wobei das Fahrzeug ferner eine Vorrichtung zur aktiven Lenkunterstützung aufweist, wobei
ein zusätzliches Lenkmoment vorgegebener Größe und Dauer bei Rechtsverkehr nach links und bei Linksverkehr nach rechts wirkend zur Erzeugung eines entsprechenden Lenkwinkels vorgegebener Größe auf die Lenkunterstützung aufgebracht wird, wenn der Autobahnassistent erkennt, dass innerhalb einer vorgegebenen Vorausschauweite die Wunschgeschwindigkeit des ADR durch ein vorausfahrendes Fahrzeug herabgesetzt werden müsste, eine weitere Fahrbahn sich bei Rechtsverkehr links und bei Linksverkehr rechts von der aktuellen Fahrbahn befindet und eine Lücke zum Fahrbahnwechsel auf die weitere Fahrbahn vorhanden ist.

2. Autobahnassistent, insbesondere nach Anspruch 1, zum semiautonomen Fahren für eine Kraftfahrzeug mit einem Spurwechselassistenten, einer Vorrichtung zur Fahrspurerkennung, einer Navigationseinrichtung und einer automatischen Distanzregelung ADR, wobei das Fahrzeug ferner eine Vorrichtung zur aktiven Lenkunterstützung aufweist, wobei
ein zusätzliches Lenkmoment vorgegebener Größe und Dauer bei Rechtsverkehr nach rechts und bei Linksverkehr nach links zur Erzeugung eines entsprechenden Lenkwinkels vorgegebener Größe auf die Lenkunterstützung aufgebracht wird, wenn bei Rechtsverkehr rechts und bei Linksverkehr links von der aktuellen Fahrbahn des Fahrzeugs sich eine weitere Fahrbahn befindet, eine Lücke zum Fahrbahnwechsel auf die weitere Fahrspur erkannt wird und sich auf der weiteren Fahrspur innerhalb einer vorgegebenen Vorausschauweite kein vorausfahrendes Fahrzeug befindet, dass ein Herabsetzen der Wunschgeschwindigkeit durch das ADR nötig machen würde.

3. Autobahnassistent nach einem der vorangegangenen Ansprüche, **dadurch gekennzeichnet, dass** der Spurwechselassistent ein in Fahrtrichtung nach hinten gerichtetes Nahradar und/oder Nahbereichs-Lidar aufweist.

4. Autobahnassistent nach einem der vorangegangenen Ansprüche, **dadurch gekennzeichnet, dass** die Fahrspurerkennung eine Monovideokamera aufweist.

5. Autobahnassistent nach einem der vorangegangenen Ansprüche, **dadurch gekennzeichnet, dass** das ADR einen Femradar und/oder ein Lidar aufweist.

6. Autobahnassistent nach einem der vorangegangenen Ansprüche, **dadurch gekennzeichnet, dass** der Autobahnassistent über einen vorgegebenen Zeithorizont detektierte Fahrzeuge überwacht.

7. Autobahnassistent nach einem der vorangegangenen Ansprüche, **dadurch gekennzeichnet, dass** die Kamera der Fahrspurerkennung und das Femradar des ADR miteinander gekoppelt werden, um aus der Korrelation ein vorausschauendes Fahren zu ermöglichen.

8. Autobahnassistent nach einem der vorangegangenen Ansprüche, **dadurch gekennzeichnet, dass** der Assistent seitens des Fahrers übersteuerbar ist.

9. Autobahnassistent nach einem der vorangegangenen Ansprüche, **dadurch gekennzeichnet, dass** der Assistent einen Spurhalteassistent mit aktivem Lenkeingriff aufweist.

10. Verfahren zum teilautonomen Fahren eines Kraftfahrzeugs auf einer Straße mit mindestens zwei Fahrbahnen gleicher Fahrtrichtung unter Verwendung eines Autobahnassistenten nach einem der vorangegangenen Ansprüche mit den folgenden Schritten:
- Analysieren ob innerhalb einer vorgegebenen Vorausschauweite sich ein vorausfahrendes Fahrzeug auf der eigenen aktuellen Fahrspur befindet, welches dazu zwingt eine eingestellte Wunschgeschwindigkeit herabsetzen zu müssen,
- Feststellen, ob sich bei Rechtsverkehr links von der eigenen Fahrspur und bei Linksverkehr rechts von der eigenen Fahrspur eine weitere Fahrbahn befindet,
- Feststellen, ob eine zum Ausscheren ausreichende Fahrlücke sich auf der weiteren Fahrbahn befindet,
- Ausgeben einer Spurwechselempfehlung an den Fahrer, wenn die vorangegangenen Schritte positiv beantwortet werden, wobei die Spurwechselempfehlung durch Aufbringen eines geringen Lenkmoments vorgegebener Größe und Dauer auf die Lenkung zur Erzeugung eines entsprechenden Lenkwinkels vorgegebener Größe in Richtung der Zielspur hin erfolgt.

11. Verfahren nach Anspruch 10, mit den weiteren Schritten:
- Feststellen, ob in der Vorausrichtung sich auf der weiteren Fahrbahn kein weiteres vorausfahrendes Fahrzeug befindet, welches zum Verringern der Wunschgeschwindigkeit führen würde.

12. Verfahren, insbesondere nach einem der Ansprüche 10 oder 11, zum teilautonomen Fahren eines Kraftfahrzeugs auf einer Straße mit mindestens zwei Fahrbahnen gleicher Fahrtrichtung unter Verwendung eines Autobahnassistenten nach einem der vorangegangenen Ansprüche mit den folgenden Schritten:
- Feststellen, ob sich bei Rechtsverkehr rechts von der aktuellen Fahrspur und bei Linksverkehr links von der aktuellen Fahrspur eine weitere Fahrbahn befindet,
- Feststellen, dass sich auf der weiteren Fahrbahn innerhalb der Vorausschauweite kein Fahrzeug befindet, welches zu einem Herabsetzen der Wunschgeschwindigkeit zwingen würde,
- Feststellen, dass sich eine zum Ausscheren ausreichende Fahrlücke auf der weiteren Fahrbahn befindet, und
- Ausgeben einer Spurwechselempfehlung an den Fahrer, wenn die vorangegangenen Schritte positiv beantwortet werden., wobei die Spurwechselempfehlung durch Aufbringen eines geringen Lenkmoments vorgegebener Größe und Dauer auf die Lenkung zur Erzeugung eines entsprechenden Lenkwinkels vorgegebener Größe in Richtung der Zielspur hin erfolgt.

13. Verfahren nach einem der Ansprüche 10 bis 12, **dadurch gekennzeichnet, dass** das räumliche und zeitliche Verhalten der festgestellten Fahrzeuge für eine vorgegebene Zeitspanne verfolgt wird.

14. Verfahren nach Anspruch 13, **dadurch gekennzeichnet, dass** überholte Fahrzeuge getrackt werden.

## Claims

1. Motorway assistant for semi-autonomous driving for a motor vehicle having a lane change assistant, a device for detecting a lane, a navigation device and an automatic distance controller ADC, wherein the vehicle also has a device for providing active steering assistance, wherein an additional steering torque of a predefined magnitude and duration is applied to the steering assistance to the left in the case of right-hand traffic and to the right in the case of left-hand traffic with the effect of generating a corresponding steering angle of a predefined magnitude if the motorway assistant detects that the desired speed of the ADC would have to be reduced within a predefined look-ahead distance due to a vehicle travelling ahead, a further lane is located to the left of the current lane in the case of right-hand traffic and to the right of the current lane in the case of left-hand traffic, and there is a gap for changing lane onto the other lane.

2. Motorway assistant, in particular according to Claim 1, for semi-autonomous driving for a motor vehicle having a lane change assistant, a device for detecting a lane, a navigation device and an automatic distance controller ADC, wherein the vehicle also has a device for providing active steering assistance, wherein an additional steering torque of a predefined magnitude and duration is applied to the steering assistance to the right in the case of right-hand traffic and to the left in the case of left-hand traffic in order to generate a corresponding steering angle of a predefined magnitude if a further lane is located to the right of the current lane of the vehicle in the case of right-hand traffic and to the left in the case of left-hand traffic, a gap for changing lane onto the other lane is detected, and within a predefined look-ahead distance on the other lane there is no vehicle travelling ahead which would require the desired speed to be reduced by the ADC.

3. Motorway assistant according to one of the preceding claims, **characterized in that** the lane change assistant has a close-range radar and/or close-range lidar system which is directed to the rear in the direction of travel.

4. Motorway assistant according to one of the preceding claims, **characterized in that** the lane detection system has a monovideo camera.

5. Motorway assistant according to one of the preceding claims, **characterized in that** the ADC has a long-range radar and/or a lidar.

6. Motorway assistant according to one of the preceding claims, **characterized in that** the motorway assistant monitors vehicles which have been detected over a predefined time horizon.

7. Motorway assistant according to one of the preceding claims, **characterized in that** the camera of the lane detection system and the long-range radar of the ADC are coupled to one another in order to permit predictive driving on the basis of the correlation.

8. Motorway assistant according to one of the preceding claims, **characterized in that** the assistant can be overridden by the driver.

9. Motorway assistant according to one of the preceding claims, **characterized in that** the assistant has a lane-holding assistant with an active steering intervention facility.

10. Method for semi-autonomous driving of a motor vehicle on a road having at least two lanes in the same direction of travel using a motorway assistant according to one of the preceding claims, having the following steps:
- analysis of whether a vehicle travelling ahead on the driver's own current lane is located within a predefined look-ahead distance, which vehicle travelling ahead means that a desired speed which has been set has to be reduced,
- determination of whether there is another lane to the left of the driver's own lane in the case of right-hand traffic and to the right of the driver's own lane in the case of left-hand traffic,
- determination of whether there is a gap on the other lane which is sufficient for a vehicle to cut in,
- outputting of a lane change recommendation to the driver if the preceding steps have received positive responses, wherein the lane change recommendation is issued by applying a small steering torque of a predefined magnitude and duration to the steering in order to generate a corresponding steering angle of a predefined magnitude in the direction of the target lane.

11. Method according to Claim 10, having the further steps:
- determination of whether no other vehicle which is travelling ahead and which would lead to a reduction in the desired speed is located in the forward direction on the other lane.

12. Method, in particular according to one of Claims 10 or 11, for semi-autonomous driving of a motor vehicle on a road having at least two lanes in the same direction of travel using a motorway assistant according to one of the preceding claims, having the following steps:
- determination of whether there is a further lane to the right of the current lane in the case of right-hand traffic and to the left of the current lane in the case of left-hand traffic,
- determination that within the look-ahead distance on the other lane there is no vehicle which would require the desired speed to be reduced,
- determination that a gap which is sufficient for a vehicle to cut in is located on the other lane, and
- outputting of a lane change recommendation to the driver if the preceding steps have received positive responses, wherein the lane change recommendation is issued by applying a small steering torque of a predefined magnitude and duration to the steering in order to generate a corresponding steering angle of a predefined magnitude in the direction of the target lane.

13. Method according to one of Claims 10 to 12, **characterized in that** the spatial and chronological behaviours of the detected vehicles are tracked for a predefined time period.

14. Method according to Claim 13, **characterized in that** vehicles which have been overtaken are tracked.

## Revendications

1. Assistant d'autoroute destiné à la conduite semi-autonome pour un véhicule automobile comprenant un assistant de changement de voie, un dispositif de détection de voie de circulation, un dispositif de navigation et un régulateur de distance automatique ADR, le véhicule présentant en plus un dispositif d'assistance active à la direction, un couple de changement de direction supplémentaire d'intensité et de durée prédéfinies étant appliqué à l'assistance à la direction, agissant vers la gauche dans le cas d'une circulation à droite et vers la droite dans le cas d'une circulation à gauche en vue de générer un angle de direction correspondant d'amplitude prédéfinie lorsque l'assistant d'autoroute détecte qu'il convient de réduire la vitesse souhaitée de l'ADR à l'intérieur d'une marge d'anticipation prédéfinie du fait de la présence d'un véhicule qui précède, qu'une voie de circulation supplémentaire se trouve à gauche de la voie de circulation actuelle dans le cas d'une circulation à droite et à droite dans le cas d'une circulation à gauche et qu'il existe un intervalle permettant de changer de voie pour passer sur la voie de circulation supplémentaire.

2. Assistant d'autoroute, notamment selon la revendication 1, destiné à la conduite semi-autonome pour un véhicule automobile comprenant un assistant de changement de voie, un dispositif de détection de voie de circulation, un dispositif de navigation et un régulateur de distance automatique ADR, le véhicule présentant en plus un dispositif d'assistance active à la direction, un couple de changement de direction supplémentaire d'intensité et de durée prédéfinies étant appliqué à l'assistance à la direction, agissant vers la droite dans le cas d'une circulation à droite et vers la gauche dans le cas d'une circulation à gauche en vue de générer un angle de direction correspondant d'amplitude prédéfinie lorsqu'une voie de circulation supplémentaire se trouve à droite de la voie de circulation actuelle du véhicule dans le cas d'une circulation à droite et à gauche dans le cas d'une circulation à gauche, qu'un intervalle permettant de changer de voie pour passer sur la voie de circulation supplémentaire est détecté et que sur la voie de circulation supplémentaire, à l'intérieur d'une marge d'anticipation prédéfinie, ne se trouve aucun véhicule qui précède qui rendrait nécessaire une diminution de la vitesse souhaitée par l'ADR.

3. Assistant d'autoroute selon l'une des revendications précédentes, **caractérisé en ce que** l'assistant de changement de voie présente un radar de proximité et/ou un lidar de zone de proximité dirigé vers l'arrière dans le sens de circulation.

4. Assistant d'autoroute selon l'une des revendications précédentes, **caractérisé en ce que** le dispositif de détection de voie de circulation présente une mono-caméra vidéo.

5. Assistant d'autoroute selon l'une des revendications précédentes, **caractérisé en ce que** l'ADR présente un radar à longue portée et/ou un lidar.

6. Assistant d'autoroute selon l'une des revendications précédentes, **caractérisé en ce que** l'assistant d'autoroute surveille les véhicules détectés sur un horizon temporel prédéfini.

7. Assistant d'autoroute selon l'une des revendications précédentes, **caractérisé en ce que** la caméra du dispositif de détection de voie de circulation et le radar à longue portée de l'ADR sont couplés l'un à l'autre afin de permettre une circulation par anticipation à partir de la corrélation.

8. Assistant d'autoroute selon l'une des revendications précédentes, **caractérisé en ce que** l'assistant peut être commandé avec priorité par le conducteur.

9. Assistant d'autoroute selon l'une des revendications précédentes, **caractérisé en ce que** l'assistant présente un assistant de maintien de la voie avec intervention active de la direction.

10. Procédé de conduite semi-autonome d'un véhicule automobile sur une route comprenant au moins deux voies de circulation dans le même sens en utilisant un assistant d'autoroute selon l'une des revendications précédentes, comprenant les étapes suivantes :
- Analyse de la présence ou non, à l'intérieur d'une marge d'anticipation prédéfinie, d'un véhicule qui précède sur la voie de circulation propre actuelle, lequel force à réduire une vitesse souhaitée réglée,
- Détermination de la présence ou non d'une voie de circulation supplémentaire, à gauche de la voie de circulation propre dans le cas d'une circulation à droite et à droite de la voie de circulation propre dans le cas d'une circulation à gauche,
- Détermination de la présence ou non d'un intervalle suffisant pour permettre de déboîter sur la voie de circulation supplémentaire,
- Délivrance d'une recommandation de changement de voie au conducteur lorsque les étapes précédentes ont donné un résultat positif, la recommandation de changement de voie s'effectuant en appliquant un léger couple de changement de direction d'intensité et de durée prédéfinies à la direction en vue de générer un angle de direction correspondant d'amplitude prédéfinie en direction de la voie de destination.

11. Procédé selon la revendication 10, comprenant les étapes supplémentaires :
- Détermination de l'absence ou non d'un véhicule qui précède supplémentaire sur la voie de circulation supplémentaire dans la direction prévue, lequel entraînerait une diminution de la vitesse souhaitée.

12. Procédé, notamment selon l'une des revendications 10 ou 11, de conduite semi-autonome d'un véhicule automobile sur une route comprenant au moins deux voies de circulation dans le même sens en utilisant un assistant d'autoroute selon l'une des revendications précédentes, comprenant les étapes suivantes :
- Détermination de la présence ou non d'une voie de circulation supplémentaire, à droite de la voie de circulation actuelle dans le cas d'une circulation à droite et à gauche de la voie de circulation actuelle dans le cas d'une circulation à gauche,
- Détermination de l'absence ou non d'un véhicule sur la voie de circulation supplémentaire à l'intérieur de la marge d'anticipation, lequel forcerait une diminution de la vitesse souhaitée,
- Détermination de la présence ou non d'un intervalle suffisant pour permettre de déboîter sur la voie de circulation supplémentaire, et
- Délivrance d'une recommandation de changement de voie au conducteur lorsque les étapes précédentes ont donné un résultat positif, la recommandation de changement de voie s'effectuant en appliquant un léger couple de changement de direction d'intensité et de durée prédéfinies à la direction en vue de générer un angle de direction correspondant d'amplitude prédéfinie en direction de la voie de destination.

13. Procédé selon l'une des revendications 10 à 12, **caractérisé en ce que** le comportement dans l'espace et dans le temps des véhicules détectés est suivi pendant un intervalle de temps prédéfini.

14. Procédé selon la revendication 13, **caractérisé en ce que** les véhicules dépassés sont suivis.
